(19) Europäisches Patentamt
European Patent Office
Office européen des brevets

(11) **EP 4 730 673 A2**

(12) **EUROPEAN PATENT APPLICATION**

(43) Date of publication:
**22.04.2026   Bulletin 2026/17**

(51) International Patent Classification (IPC):
***H04B 10/118*** (2013.01)        ***H04B 10/70*** (2013.01)
***G02B 27/10*** (2006.01)

(21) Application number: **25198723.6**

(22) Date of filing: **28.08.2025**

(52) Cooperative Patent Classification (CPC):
**H04B 10/70; G02B 27/10; H04B 10/118**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   **15.10.2024   GB 202415143**

(71) Applicant: **KABUSHIKI KAISHA TOSHIBA**
**Kawasaki-shi, Kanagawa (JP)**

(72) Inventors:
• **SINGH, Ravinder**
  **Cambridge, CB4 0GZ (GB)**

• **PERUMANGATT, Chithrabhanu**
  **Cambridge, CB4 0GZ (GB)**
• **ROGER, Thomas**
  **Cambridge, CB4 0GZ (GB)**
• **WARD, Martin Brian**
  **Cambridge, CB4 0GZ (GB)**
• **SKIBA-SZYMANSKA, Joanna Krystyna**
  **Cambridge, CB4 0GZ (GB)**
• **WOODWARD, Robert Ian**
  **Cambridge, CB4 0GZ (GB)**
• **SHIELDS, Andrew James**
  **Cambridge, CB4 0GZ (GB)**

(74) Representative: **Marks & Clerk LLP**
**15 Fetter Lane**
**London EC4A 1BW (GB)**

(54)   **QUANTUM COMMUNICATION DEVICE**

(57)   A quantum communication device comprising: an adjustable beam separator configured to receive an optical signal comprising encoded light at an optical input of the adjustable beam separator, and configured to couple the optical input to a first output path and to a second output path according to a beam separation ratio of the adjustable beam separator; and a controller configured to control the adjustable beam separator to adjust the beam separation ratio according to the value of a first ratio, the first ratio being a usage ratio of a first basis and a second basis used for encoding the encoded light; and a detector assembly comprising a first detector configured to receive a first signal from the first output path and to measure the received first signal in the first basis, and a second detector configured to receive a second signal from the second output path and to measure the received second signal in the second basis.

FIG. 1

EP 4 730 673 A2

Description

**FIELD OF INVENTION**

Embodiments described herein relate to a quantum communication device configured to receive quantum information and a quantum communication method.

**BACKGROUND**

In a quantum communication system, information is sent between a transmitter and a receiver by encoded single quanta, such as single photons. Each photon carries one bit of information which can be encoded upon a property of the photon, such as its polarization.

Quantum key distribution (QKD) is a technique which results in the sharing of cryptographic keys between two parties: a transmitter often referred to as "Alice"; and a receiver often referred to as "Bob". The attraction of this technique is that it provides a test of whether any part of the key can be known to an unauthorised eavesdropper, often referred to as "Eve". In many forms of quantum key distribution, Alice and Bob use two or more non-orthogonal bases in which to encode the bit values. The laws of quantum mechanics dictate that measurement of the photons by Eve without prior knowledge of the encoding basis of each causes an unavoidable change to the state of some of the photons. These changes to the states of the photons will cause errors in the bit values sent between Alice and Bob. By comparing a part of their common bit string, Alice and Bob can thus determine if Eve has gained information.

**BRIEF DESCRIPTION OF THE FIGURES**

Embodiments of the invention will now be described by way of example with reference to the accompanying drawings.

Figure 1 is a schematic of a quantum communication device in an accordance with an embodiment.

Figure 2 is a schematic of a quantum communication device deployed for communication with one or more satellites.

Figures 3A - 3E illustrate example of adjustable beam separators for use in a quantum communication device.

Figure 4A is a schematic of a quantum communication device in an accordance with an embodiment.

Figure 4B illustrates an example polarization beam splitter assembly configured for use in a quantum communication device.

Figure 4C illustrates a free wave coupled detector configured for use in a quantum communication device.

Figure 4D illustrates a fiber-coupled detector configured for use in a quantum communication device.

Figure 5 illustrates an optical device in accordance with an embodiment.

Figure 6A illustrates a multi-band optical beam separator configured for use in a quantum communication device.

Figure 6B illustrates a bandpass filter configured for use in a quantum communication device.

**DETAILED DESCRIPTION**

Various aspects and embodiments are set out in the appended claims.

In an embodiment, there is provided a quantum communication device comprising:

an adjustable beam separator configured to receive an optical signal comprising encoded light at an optical input of the adjustable beam separator, and configured to couple the optical input to a first output path and to a second output path according to a beam separation ratio of the adjustable beam separator; and

a controller configured to control the adjustable beam separator to adjust the beam separation ratio according to the value of a first ratio, the first ratio being a usage ratio of a first basis and a second basis used for encoding the encoded light; and

a detector assembly comprising a first detector configured to receive a first signal from the first output path and to measure the received first signal in the first basis, and a second detector configured to receive a second signal from the second output path and to measure the received second signal in the second basis.

The disclosed quantum communication provides more efficient and adaptable quantum communication. The device is configured to receive and measure encoded light in two bases, and is able to adapt the configuration of the device to bias the ratio in which each basis is used for measurement of received encoded light. As a result, the quantum communication device can be dynamically adapted to accommodate different transmitter configurations and to receive information from different transmitters without loss of efficiency. For example, the quantum information device is able to optimise the key transfer rate when used in a Quantum Key Distribution (QKD) protocol.

A quantum transmitter may be configured to encode light to generate a bit stream of quantum information, where each bit of the bit stream is encoded in one of two conjugate bases. To encode each bit, the quantum transmitter is configured such that there is a first probability P1 of encoding the bit in a state of the first basis and there is a second probability P2 of encoding the bit in the second basis. The first probability and the second probability may be defined by a probability ratio R = P1/P2, also defined as the usage ratio of the bases. As a result, when a quantum bit stream generated by the transmitter such that a number of bits encoded in the first basis and the number of bits encoded in the second basis are different. The usage ratio may vary in order to bias the bit stream to provide more bits in one of the two bases. For example, one encoder may encode light in a first and second bases according to a 90:10 usage ratio, and a second may encode light according to a 93:7 ratio. The ratio may be set by the particular optical elements used in the transmitter, or may be set or varied at the transmitter according to the communication channel over which the encoded light is to be transmitted.

The quantum communication devices as described herein are able to adjust the configuration of the measuring optics so as to measure in the two bases to match the ratio of the bases used by the transmitter. Thus, the quantum communication devices may dynamically adapt to multiple different transmitters having different configurations or adapt to changing configurations within the same transmitter in a manner that maintaining efficiency in the transmission of quantum information.

Furthermore, by providing a single quantum communication device that can adapt its operational parameters to communicate with different transmitters operating different protocol parameters means that overall size, complexity and cost of a quantum receiving apparatus can be reduced (as compared, for example, to a device implementing a plurality of different quantum communication devices each configured with a fixed beam separation ratio).

For example, the quantum communication device may be configured to receive quantum information as part of a QKD protocol. The ratio of bases used for encoding may be varied to mitigate channel loss and optimise the key transmittal rate.

For example, the quantum communication device may be deployed in quantum communication system comprising a ground station and multiple satellites in low-earth orbit (LEO). Although a LEO satellite can scan almost entire earth in one day, it is visible from any one point on earth for a short window (e.g. a few minutes only). Therefore, finite block length effects need to be taken into account for the calculation of the secret key in a satellite QKD network. For the practical purpose of the key distribution, each satellite overpass should contribute to a secret key that is sufficiently large to enable secure communication between two parties (nodes) for a certain period of time. Furthermore, processing higher amounts of the raw key leads to minimize the difference between the asymptotic and finite secret key. This can be achieved by improving the capacity of the QKD channel and by ensuring that an optical ground station (OGS) is compatible with different satellite payloads working with different protocol parameters so that the secret key generation capacity of an OGS is maximized.

Different satellites may deploy different quantum communication protocols, and furthermore the channel loss may vary for each satellite, and each OGS, and the channel loss may vary during the course of an overpass of the satellite due to changing link distance. The disclosed system may adapt its operational parameters based on changing channel loss and/or changes in a quantum communication protocol between satellites or during the overpass of a particular satellite.

In an embodiment, the adjustable beam separator comprises a plurality of segments, each segment of the plurality of segments providing a different beam separation ratio, the adjustable beam separator configured to be actuated by the controller to place a segment of the plurality of segments into the path of the optical signal.

In an embodiment, the adjustable beam separator comprises a circular partial reflecting mirror, wherein each segment of the adjustable beamsplitter comprises an arc segment of the circular partial reflecting mirror, and wherein the circular partial reflecting mirror is mounted on a motorized rotating mount, or wherein the adjustable beam separator comprises a rectangular partial reflecting mirror, wherein each segment of the adjustable beamsplitter comprises a segment of the rectangular partial reflecting mirror, and wherein the rectangular partial reflecting mirror is mounted on a motorized translation mount.

In an embodiment, the adjustable beam separator comprises a first segment that is partially reflecting and a second segment that is partially reflecting, wherein the first segment and second segment are configured to overlap to provide an overlapping partially reflective region with a beam separation ratio in the path of the optical signal,

wherein the adjustable beam separator is configured such that the overlap between the first segment and the second segment is continuously adjustable, and wherein the first segment and second segment are configured such that the beam separation ratio provided by the overlapping partially reflective region varies according to the overlap.

In an embodiment, the adjustable beam separator comprises:

a spatial filter configured to receive the optical signal and perform spatial filtering to provide a single spatial mode; and
an adjustable optical device configured for receive the single spatial mode the spatial filter and perform variable spatial sampling on the single spatial mode.

In an embodiment, the quantum communication device further comprises a multi-band bandpass filter configured to filter the optical signal comprising the encoded light.

In an embodiment, the quantum communication device further comprises at least one waveplate arranged before the adjustable beam separator, the at least one waveplate configured to align the polarization of the optical signal.

In an embodiment, the first detector comprises a first photon detector and a first polarization beam splitter,

the first polarization beam splitter configured to split the first signal into a first signal component and a second signal component and to direct the first signal component into the first photon detector.

In an embodiment, the first detector further comprises a second polarization beam splitter and a second photon detector,

> wherein the first polarization beam splitter is configured to direct the second signal component into the second polarization beam splitter,
> wherein the second polarization beam splitter is configured to split the second signal component into a third signal component and a fourth signal component and to direct the third signal component into the second photon detector.

In an embodiment, the second detector comprises a third photon detector and a third polarization beam splitter,

the third polarization beam splitter configured to split the second signal into a fifth signal component and a sixth signal component and to direct the fifth signal component into the third photon detector.

In an embodiment, the second detector further comprises a fourth polarization beam splitter and a fourth photon detector,

> wherein the third polarization beam splitter is configured to direct the sixth signal component into the fourth polarization beam splitter,
> wherein the fourth polarization beam splitter is configured to split the fourth signal component into a seventh signal component and an eighth signal component and to direct the seventh signal component into the fourth photon detector.

In an embodiment, the detector assembly is configured:

> to determine a second ratio, the second ratio being a ratio of an intensity of the first signal measured by the first detector and an intensity of the second signal measured by the second detector, and

to transmit a control signal to the controller based on the determined intensity, wherein the controller is further configured to control the adjustable beam separator so as to adjust the value of the second ratio toward the value of the first ratio.

There is also described optical system comprising a quantum communication device as described above, the optical system further comprising:

> a multi-band beam separator,
> a beam-steering device adapted to receive an incoming signal and to output the incoming signal to the multi-band beam separator,
> wherein the multi-band beam separator is configured to separate the optical signal from the incoming signal and to output the optical signal to the quantum communication device.

In an embodiment, the optical system further comprises a tracking system;

> wherein the multi-band beam separator is further configured to separate a beacon signal from the incoming signal and is adapted to output the beacon signal to the tracking system; and
> wherein the tracking system is configured to determine an alignment of the beacon signal and to control the beam-steering device to adjust the beacon signal alignment based on the determination.

In an embodiment, the detector assembly is configured, in a feedback loop:

> to determine a total intensity, the total intensity being a sum of an intensity of the first signal measured by the first detector and an intensity of the second signal measured by the second detector, and
> to control the beam-steering device based on the determined intensity so as to maximise the total intensity.

In an embodiment, the multi-band beam separator is further configured to separate, from the incoming signal, a first auxiliary signal and a second auxiliary signal, wherein the first auxiliary signal is in a second optical band and the second auxiliary signals is in a third optical band.

In an embodiment, the optical system is located on the surface of the earth, and is configured to receive the optical signal from a satellite.

There is further described a method of performing quantum communication at a quantum communication device, the method comprising:

> obtaining a first value for a first ratio, the first ratio being a usage ratio of a first basis and a second basis used for encoded light in an optical signal;

adjusting a beam separation ratio of an adjustable beam separator according to the first value of the first ratio, wherein the adjustable beam separator comprises an optical input and is configured to couple the optical input to a first output path and to a second output path according to the beam separation ratio; receiving a first optical signal at the optical input of the adjustable beam separator;

receiving a first signal from the first output path at a first detector and measuring the received first signal by the first detector in the first basis, and

receiving a second signal from the second output path at a second detector and measuring the received second signal by the second detector in the second basis.

In an embodiment, the method further comprises:

adjusting the beam separation ratio of an adjustable beam separator according to a second value for the first ratio;

receiving a second optical signal at the optical input of the adjustable beam separator;

receiving a third signal from the first output path at the first detector and measuring the received third signal by the first detector in the first basis, and

receiving a fourth signal from the second output path at the second detector and measuring the received fourth signal by the second detector in the second basis.

In an embodiment, the quantum communication device is located on the surface of the Earth, the method further comprising receiving the first value from a first satellite, and receiving the second value from a second satellite.

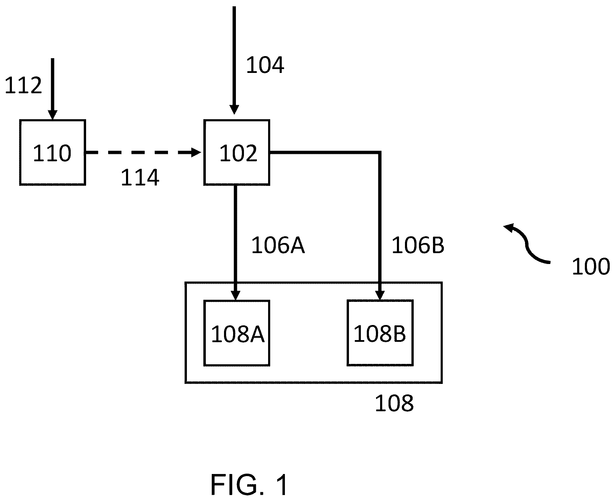

Figure 1 shows a quantum communication device 100. Quantum communication device 100 is configured to receive an optical signal 104 comprising encoded light and configured to perform a measurement on the received encoded light. For example, quantum communication device 100 is a quantum receiver or a quantum transceiver configured to receive light encoded with quantum information. The encoded light may comprise a plurality of encoded bits in a quantum bit stream. The encoded bits may be in the form of portions or pulses of light.

The quantum communication device 100 of Figure 1 and other examples described herein is configured to be used as part of a quantum communication protocol. The quantum communication protocol deployed by the quantum communication systems disclosed herein may be a QKD protocol, such as the Bennett-Brassard 1984 protocol (BB84 protocol). The BB84 protocol is a protocol in which information may be encoded in quanta, such as photons, and the encoded information used to agree a secret key with eavesdropper detection.

The BB84 protocol is performed between two parties, the transmitter (Alice) and receiver (Bob), over a classical communication channel and a quantum communication channel. Alice encodes information onto quanta (e.g. photons) in one of two conjugate bases to generate a plurality of quantum bits. For example, when polarization is used to encode the information, the first basis may be the rectilinear basis (including the vertically polarized state and horizontally polarized state) and the second basis may be the diagonal basis (including the diagonally polarized state and anti-diagonally polarized state). Alice transmits the plurality of quantum bits to Bob in a quantum bit stream over the quantum communication channel. Bob receives the quantum bit stream and passes the quantum bit stream into one of two detector apparatuses, each detector apparatus configured to measure in one of the two conjugate bases.

When generating each quantum bit, Alice will randomly choose in which basis the quantum bit is encoded, with a fixed probability of choosing each basis (e.g. each basis is chosen with a 50:50 ratio). When receiving a quantum bit from Alice, Bob will randomly choose in which basis the quantum bit is to be measured, also with a fixed probability of choosing each basis that may be the same probability as chosen by Alice (e.g. 50:50 split between each basis). Alice and Bob may communicate over the classical communication channel to agree the fixed probability prior to the transmission of the quantum bit stream. After a number of bits have been exchanged and measured, Alice will inform Bob (over the classical communication channel) in which bases each bit was encoded for the transmitted number of bits. For each bit of the bit stream, Bob can then compare the basis selected by Alice and the basis selected by himself and discard the measured information for the received bits where the bases disagree.

The resulting measured information (i.e. the measured information for which the encoding and decoding bases are in agreement) can be used for agreement of a secret key and to perform eavesdropper detection and error detection. To detect an eavesdropper, Alice and Bob can select a subset of the measured bits and compare the state detected by Bob and the state transmitted by Alice for each bit. Disagreement in the compared values of the bits could imply the presence of a third party attempting to eavesdrop on the transmitted bit stream. If the transmitted and measured states disagree above an agreed percentage of the received bits, an eavesdropper is determined to be present and the entire bit stream discarded. If the transmitted and measured states disagree below a specified percentage, an eavesdropper is determined to not be present. The remaining bits of information where the bases are in agreement can then be used as a secret key for subsequent communication.

In the above-described example, the agreement of a secret key includes the discarding of some transmitted and received information. The discarding of information includes discarding information where the bases selected by Alice and the bases selected by Bob are not in agreement. Thus, one way to optimise the transmission rate of key information is to minimise the number of bits to be discarded.

An efficient BB84 protocol can be implemented biasing the usage probability of the two bases away from an equal split (i.e. away from a 50:50 ratio used in the traditional BB84 protocol). For example, if Alice and Bob each choose to encode/measure in a first basis 60% of the time, the probability of bases being in agreement will increase as compared to choosing the first basis 50% of the time and more key information can be transmitted. In some examples, the basis selected with greater probability (majority basis) can be used as the key generation basis and the basis selected with the lesser probability (minority basis) can be used as the error detection basis. The greater the value of the bias, the greater the chance of the transmitter and receiver of choosing the same basis and the larger the number of available bits of information encoded in the same, key generating basis. As a result, the key generation rate is increased.

However, if the information stream is biased too far in favour of one bases, there may be too few detected bits, or no detected bits at all, for which the transmitter and receiver have both used the minority basis. In this case it may become difficult to detect an eavesdropper attempting to intercept and retransmit the information in a side channel attack, and the quantum communication device is unable to function in a QKD protocol. For example, in earth-to-satellite QKD too few bits may be received over the transmission window, or there may be channel loss present in the quantum communication channel resulting in the loss of information. An eavesdropper may then be able to set her side channel transmitter/receiver to a single basis and perform a side channel attack.

Therefore different ratios of bases used for encoding the light may be required depending on the apparatus and environmental conditions used for encoding the light. If a quantum communication channel with a lower channel loss is used, the ratio of bases may be selected to have a greater bias ratio (e.g. 94:6), whereas if a quantum communication channel with a higher channel loss is used, the ratio of bases maybe selected to have a lower bias ratio (e.g. 90:10 or 70:30). The ratio selected will depend on the operational parameters of apparatus and channels used in the quantum communication.

As a result, different quantum transmitters may use different usage ratios for the encoded basis. To optimise key transmission rate between a transmitter and a receiver, the probability of choosing each of the two bases for measurement at the receiver side (i.e the basis usage ratio at the receiver) should be close to or match the usage ratio at the transmitter side.

The quantum communication device 100 of Figure 1 is configured to provide an adjustable probability of choosing between two bases for measurement of incoming encoded light. In this manner, the quantum communication device 100 is configured to perform a biased basis selection, in which the usage probability of two bases (the basis bias) can be selected. The quantum communication device 100 comprises an adjustable beam separator 102 configured to receive an optical signal 104 comprising encoded light. The optical signal 104 is received at an optical input of the adjustable beam separator 102. The optical beam separator 102 is configured to couple the optical input 104 to a first output path and to a second output path according to a beam separation ratio of the adjustable beam separator 102. For a beam of incident light, a portion of the beam of first intensity is directed into the first path, and a portion of the beam is directed into the second path, with the ratio of intensities of the separated beams being the separation ratio (thus the separation ratio is a power ratio of the adjustable beam separator). For a single photon incident upon the beam separator, the photon is directed into each path with different probabilities, with the ratio of the probabilities being the separation ratio.

For example, the separation ratio may be 50:50, resulting in an incident photon being directed into the first or second path with equal probability. The separation ratio may be 90:10, resulting in a 10% probability the photon is directed into the first path and a 90% probability directed into the second path, or 93:7 or 97:3. The adjustable beam separator is adjustable so as to provide a selected beam separation ratio, such as any separation ratio from 50:50 to 99:1.

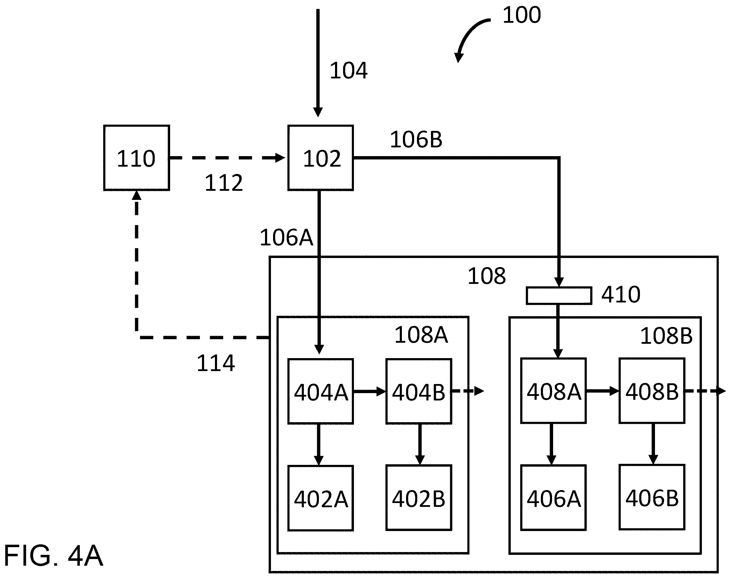

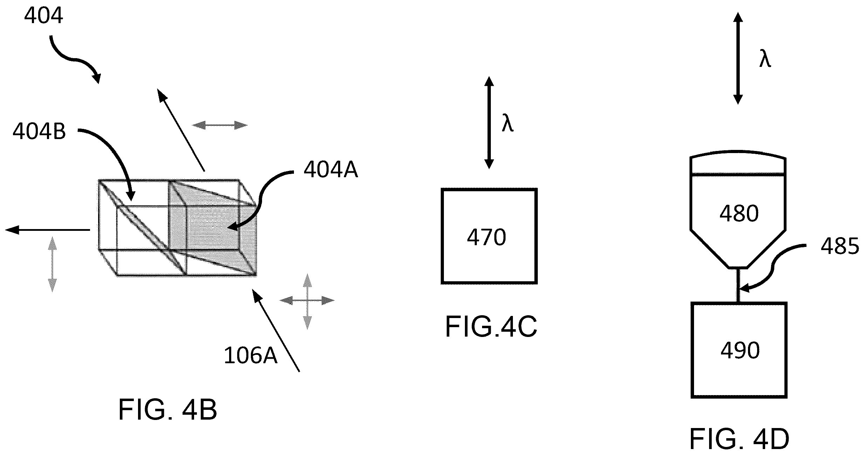

The quantum communication device 100 further comprises a detector assembly 108 coupled to the first output path to receive a first signal 106A from the first output path, and coupled to the second output path to receive a second signal 106B from the second output path. The detector assembly 108 comprises a first detector 108A configured to receive the first signal 106A from the first output path and a second detector 108B configured to receive a second signal 106B from the second output path. The first detector 108A is configured to measure the received first signal 106A in a first basis, and the second detector 108B is configured to measure the received second signal 106B in a second basis. For example, the first detector 108A and second detector 108B are polarization detectors configured to respectively measure received light encoded in a first and second polarisation basis. Examples of polarization detectors will be described below in connection with Figures 4A and 4B. In alternative examples, the first detector 108A and second detector 108B may each be a phase detector and are respectively configured to measure received light phase encoded in a first and second phase-encoded basis. The first detector 108A and second detector 108B may alternatively be time-bin encoded detectors configured to measure in a time-bin encoded basis.

With the adjustable beam separator 102 configured to divide incoming light into a first and second arm according to a separation ratio, received photons will be directed into the first detector 108A in the first arm (configured to measure in the first basis) and into the second detector 108B in the second arm (configured to measure in a second basis) with different probability. Thus, a received encoded photon will be measured in either the first basis or the second basis according to the separation ratio. The adjustable beam separator 102 is therefore configured to perform the basis selection step of a QKD protocol, and when the probability is set to 50:50 the quantum communication device 100 is configured to perform the traditional BB84 protocol as described above. In some embodiments the value of the separation ratio may match the usage ratio of the bases used in encoding light. For example, if the usage ratio is A:B, the beam separation ratio is selected to also be A:B.

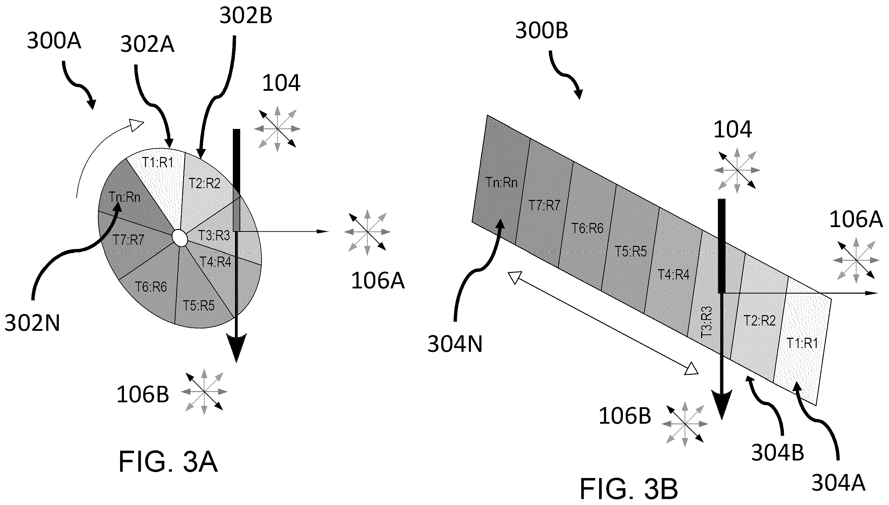

The quantum communication device 100 further comprises a controller 110 configured to control the adjustable beam separator 102 to adjust the beam separation ratio. For example, a control signal 114 is provided by the controller to the adjustable beam separator 102 to effect the adjustment (e.g. to instruct the adjustable beam separator 102 to actuate components of the adjustable beam separator 102). Examples of adjustable beam separator assemblies are described below in connection with Figures 3A - 3E.

The quantum communication device 100 is able to adjust the beam separation ratio to adapt the device to measure in two different bases according to a desired usage ratio of the bases. As stated above, the desired usage ratio of the bases may vary according to operational parameters of the quantum communication device 100 such as the communication channel being used and which transmitter is sending the encoded light. Thus, the quantum communication device is configured to obtain different usage ratio values of the first basis and the second basis and to adjust the adjustable beam separator 102 according to the obtained usage ratio value.

The controller 110 of the quantum communication device 100 is configured to obtain the usage ratio value in different ways. First, the quantum communication device 100 may receive the usage ratio value directly from the transmitter sending the encoded light (e.g. a satellite), for example via a classical communication channel. The quantum communication device 100 may alternatively receive the usage value from another source (e.g. another ground station). When received, the value may then be passed to the controller for use in adjusting the adjustable beam separator 102.

Alternatively, the controller 110 may itself determine or generate the value of the usage ratio. The quantum communication device 100 may receive information such as one or more communication parameters. The information may, for example, identify the quantum communication channel over which the encoded light is to be received by the device 100, identify the particular transmission terminal that will be sending the encoded light, identify orbital parameters of a satellite that is to transmit the encoded light, and/or other parameters. The controller 110 may determine the usage ratio value based on the received information/one or more parameters. This may be done, for example, by consulting a Look-Up-Table (LUT) that lists optimum usage ratios for different communication parameters or combinations of communication parameters. The one or more parameters may be received by the quantum communication device from the transmitter configured to encode and transmit the encoded light.

The value for the usage ratio may be received before the start of the transmission of an information stream (e.g. before a satellite overpass) and be maintained at that level during the entire bit stream. In alternative embodiments, the controller 110 may be configured to receive regular updates to the usage ratio during the bit stream, and to update the beam separation ratio during the bit stream when an updated usage ratio is received. In further alternative embodiments the controller 110 is configured to receive the usage ratio as a time dependent function, and to adjust the value of the usage ratio during the bit stream to provide a time-dependent variation of the usage ratio while the bit stream is being received. In this manner the quantum communication device 100 is configured to adapt to changing channel conditions during receipt of the optical signal and provide an optimised key transmission rate across the entire transmission period.

The biased basis selection may be performed as part of a QKD session to improve the efficiency of a key transmission rate without comprising security. In these embodiments, the quantum communication device is configured as a quantum receiver, and a QKD session utilising biased basis selection comprises, at the quantum receiver, first adjusting the beam separation ratio of the adjustable beam separator according to a value of the basis bias (usage ratio) of a first basis and a second basis. The quantum receiver configured with the basis bias then performs the steps of a QKD protocol with the adjustable beam separator configured according to the value of the basis bias.

The QKD protocol includes the receiving an optical signal at the optical input of the adjustable beam separator. In some embodiments, the optical signal includes encoded light comprising a series of encoded quantum bits, where each encoded bit is a pulse or portion of light. In some embodiments, the average number of photons in each pulse/portion of light may be < 1. The QKD protocol further includes, for each encoded bit that is received by the quantum receiver, receiving a first signal from the first output path at a first detector and measuring the received first signal by the first detector in the first basis, or receiving a second signal from the second output path at a second detector and measuring the received second signal by the second detector in the second basis.

Thus, as each bit is received at the adjustable beam separator, each photon of the encoded bit is sent into the first detector or the second detector with a probability according to the beam separation ratio, and a measurement is performed. Each encoded bit is therefore measured in the first basis or the second basis with a probability according to the basis bias, so a count will be registered in either the first detector in the second detector. Each detector may be configured such that the state of each received photon is measured as "0" or "1".

After transmission of the encoded bit stream, the quantum receiver will have generated a string of bits (e.g. "10011010...10100111"), also called a "raw key". The transmitter will also have a corresponding string of bits that was transmitted and thus a corresponding raw key. From these two raw keys, a process of sifting can be performed to generate a final key. The sifting process comprises the quantum receiver sending and receiving information on a classical communication channel to perform basis reconciliation on the raw key. In basis reconciliation, the quantum receiver receives from the transmitter an indication of the basis that was used to encode each bit in the bit stream. The quantum receiver may determine which basis was used to measure each received bit by determining in which detector a count was detected for that bit.

The basis reconciliation further comprises comparing the encoded and measuring basis for each bit, and generating key material from the raw key. In generating the key material, those bits where the transmitted basis does not match the measured basis are discarded and the bits where the transmitted basis matches the received basis are retained.

The quantum receiver may also transmit, over the classical communication channel, to the transmitter an indication of the bases that were used to measure each received bit, and the transmitter also performs basis reconciliation to generate key material matching the key material generated by the quantum receiver. Finally, the quantum receiver and transmitter, over the classical communication channel, compare the bit values of a small number of bits of the generated key material (e.g. the bits corresponding to the bits encoded in the minority basis). If the values of the compared bit values do not match (or a pre-defined fraction of the number of compared bit values do not match), then it is determined that an eavesdropper is present in the quantum communication channel. The generated key material may then be discarded.

In some circumstances, no bit is detected in the quantum receiver even when a bit is expected from the receiver in a bit time slot (i.e. a "vacuum count"). Vacuum counts occur due to losses in the channel, and instances of vacuum counts are discarded by the transmitter and receiver since they cannot be used to generate useful key material. Similarly, in some circumstances and in a bit time slot, photons are detected in each of the first and second detector (due to a finite probability that the number of photons generated in a pulse is >1, and the adjustable beam separator directs one photon into each arm). In these cases the counts are discarded since no one basis has been selected by the adjustable beam separator and thus the count cannot be used to generate useful key material. Also, in other circumstances and in a bit time slot, a count may be detected in two photon detectors in a single arm (thus registering both a "0" count and a "1" count and being a "double count"). When double counts are received, the transmitter may replace each double count instance with a random bit (either "0" or "1"), as if only one photon detector recorded a measurement.

The above described QKD protocol may be a decoy state protocol, in which the pulses/portions of light are generated by the transmitter to randomly have one of a number of different intensities. The receiver may additionally record the average number of photons detected for each pulse and compare the result against the values communicated by the transmitter over the classical communication channel after the bit stream has been transmitted. If there is a disagreement in the recorded average number (e.g. for a pre-specified number of pulses), then it may be determined that an eavesdropper is present and performing a Photon Number Splitting (PNS) attack. The key material may then be discarded.

The quantum receiver may be configured to perform a plurality of QKD sessions, with each session including adjusting the adjustable beam separator to a beam separation value to be used for the session, and performing a QKD protocol on a light portion received during the session. Upon completion of the QKD session, the adjustable beam separator may then conduct the next session (including adjusting the beam separation to a new value for the new session). Each QKD session may be performed with a different transmitter (such as a different satellite), with each optical signal received by a different transmitter and the beam separation ratio being adjusted for each QKD session.

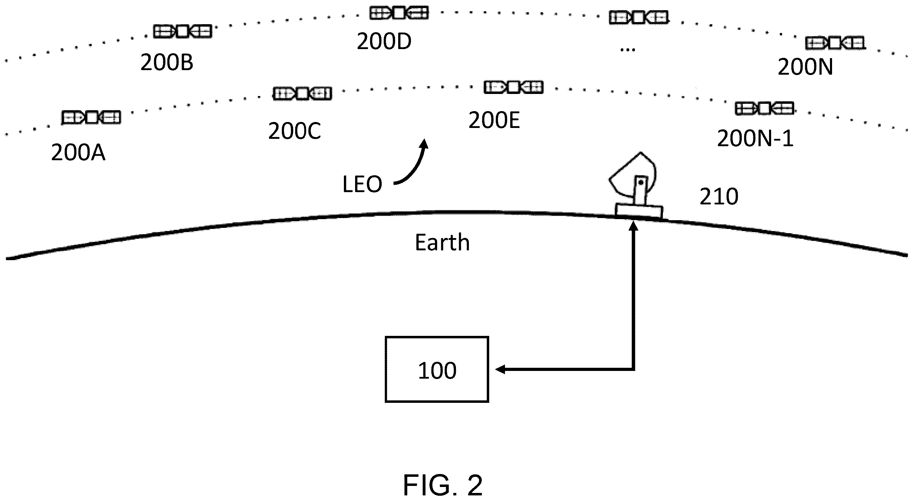

Figure 2 illustrates an example implementation of the quantum communication device 100 in which the configuration of the adjustable beam separator 102 may be adapted during implementation. In the example of Figure 2, the quantum communication device 100 is located on the Earth and in communication with a communication device 210, such as a satellite dish or other device configured to send and receive signals to and from devices above the surface of the Earth. For example, the communication device 210 is configured to communicate with one or more satellites 200A - 200N in orbit around the Earth. The satellites are illustrated in Figure 2 as Low Earth Orbit (LEO) satellites, but the communication device 210 may also be configured to communicate with Geostationary Earth Orbit (GEO) satellites, or Medium Earth Orbit (MEO) satellites. LEO satellites have an altitude of about 500 to 1200 km, thereby providing higher latency communications which provides improved communication as compared to MEO satellites (between 5000km and 20000km altitude) or GEO satellites (about 36000km altitude).

By providing an adjustable beam separator, the quantum communication devices 100 described herein are more flexible and adaptable than a quantum communication devices that use a beam separator that is fixed in value. If a beam separator with a fixed separation ratio were to be used in the quantum communication device, the quantum communication device would only be able to optimise the secret key generation rate for a specific basis probability ratio. The described quantum communication devices are therefore able to optimise key generation rates across a wider range of operational conditions.

In the context of satellite-to-ground QKD, the quantum communication devices 100 are be configured to adapt to the communication requirements for each satellite during an overpass of the communication device 210. For example, different transmitters on board the satellite may use different communication channels (using different optical bands) that may demonstrate different levels of loss in transmitted information. In order to adapt the quantum communication device 100 to optimise the secret key rate, the adjustable beam separator 102 can be adapted to vary the bases usage probability. For example, one satellite may require a beam separation ratio of 80:20 for an optimal key rate, and a subsequent satellite may require a beam separation ratio of 97:3 for an optimal key rate.

Furthermore, the average channel loss for a satellite during an over pass above the orbital ground station may vary, and during a satellite over pass the channel loss may vary due to a change in linked distance between the satellite and the orbital ground station. As such, the beam separation ratio required to achieve an optimal key rate may also vary during the over pass. The quantum communication device 100 can be configured to vary the beam separation ratio during the over pass to maintain optimal key rate. For example, the controller 110 may receive regular ratio value updates, or receive time-varying values for the ratio prior to the receipt of the bit stream, in the manner described above.

The quantum communication devices described herein are compatible with different satellite QKD sources with different source protocol parameters. By matching the protocol parameters with the source, the quantum communication devices can efficiently generate secret keys, with the optimum key rate actively maintained at the receiver during operation (e.g. to account for changing channel loss during an overpass). Furthermore, the quantum communication devices described herein can be configured to be compatible with different sources that are each configured to transmit information across a different optical band (and therefore with different rates of channel loss and optimal beam separation ratios).

In accordance with embodiments herein, methods of quantum communication includes performing multiple quantum communication operations in sequence, such as when communicating with a series of satellites passing over the quantum communication device 100.

The multiple quantum communication operations comprises obtaining a first value for the usage (e.g. obtained in the manner described above), which may be obtained from a first satellite. Once the usage ratio is received, the controller 110 adjusts the beam separation ratio of the adjustable beam separator 102 according to the first value. After the beam separator has been adjusted, the quantum communication device receives a first optical signal from the first satellite and performs measurements on the received signal (e.g. as part of a quantum communication protocol, such as a QKD protocol as part of a QKD session, as described above).

The multiple quantum communication operations further comprise, after the first optical signal has been received, obtaining a second value for the usage ratio (which may be obtained from a second satellite) and adjusting the beam separation ratio of an adjustable beam separator according to the second value. After the beam separator has been adjusted, the quantum communication device receives a second optical signal from the second satellite and performs measurements on the received signal (e.g. as part of a quantum communication protocol, such as a QKD protocol as part of a QKD session, as described above). The process may be repeated any number of times to perform the multiple quantum communication operations. Each quantum communication operation may be performed with a respective satellite passing over the quantum communication device 100 in sequential overpasses.

While the above described examples are in relation to satellite-to-ground QKD for LEO satellites, it is understood that the quantum communication device 100 may be configured to communicate with other satellites (e.g. GEO, MEO or below LEO) or may be configured to communicate with other earth-based transmitters.

While the embodiments described herein provide improvements to QKD protocols, it is understood that the quantum communication device 100 may be adapted for other types of quantum communication in which different bases are to be measured according to a usage ratio.

Figures 3A - 3E illustrate different examples of an adjustable beam separator 102 for use in the quantum communication device 100 as described above. Each of the adjustable beam separator is illustrated are configured to be adjusted based on instructions from a controller 110 to adjust a beam separation ratio.

Figures 3A - 3C illustrate example adjustable beam separators 300A, 300B and 300C according to some embodiments. Adjustable beam separators 300A, 300B and 300C are example separators that may be deployed as the adjustable beam separator 102 described above. In these embodiments, the adjustable beam separator comprises a plurality of segments, with each segment of the plurality of segments providing a different beam separation ratio. The adjustable beam separator configured to be actuated by the controller to place a segment of the plurality of segments into the path of the optical signal. Thus, the adjustable beam separator is configured to adjust the separation ratio discretely, or in steps.

Figure 3A illustrates an adjustable beam separator 300A comprising a circular partial reflecting mirror. The circular partial reflecting mirror includes a plurality of segments 302A to 302N, each in the form of an arc segment (or sector) of the circle. Each arc segment may be a partially reflecting mirror configured to transmit and reflect incident light with a transmission to reflection ratio (T:R), being the separation ratio of the adjustable beam separator. Each arc segment is fabricated to provide a different T:R ratio (e.g. different coating) such that when the incoming optical signal is incident upon the arc segment the incoming optical signal will be separated in a ratio according to the T:R ratio for the arc segment. The circular partial reflecting mirror is mounted on a motorized rotating mount so as to rotate the circular partial reflecting mirror to place one of the arc segments into the path of the incoming optical signal. For example, as shown in Figure 3A, the centre of the circular partial reflecting mirror is the axis of rotation and optical input of the adjustable beam separator is off-axis from the axis of rotation.

Figure 3B illustrates an adjustable beam separator 300B comprising a rectangular partial reflecting mirror. The rectangular partial reflecting mirror includes a plurality of rectangular or square segments 304A to 304N that are linearly aligned (e.g. joined end-to-end in a linear array). Each segment 304A to 304N may be a partially reflecting mirror configured to transmit and reflect incident light with a transmission to reflection ratio (T:R), being the separation ratio of the adjustable beam separator. Each segment is fabricated to provide a different T:R ratio such that when the incoming optical signal is incident upon the segment the incoming optical signal will be separated in a ratio according to the T:R ratio for the segment. The rectangular partial reflecting mirror is mounted on a motorized translation mount so as to translate the rectangular partial reflecting mirror to place one of the segments into the path of the incoming optical signal.

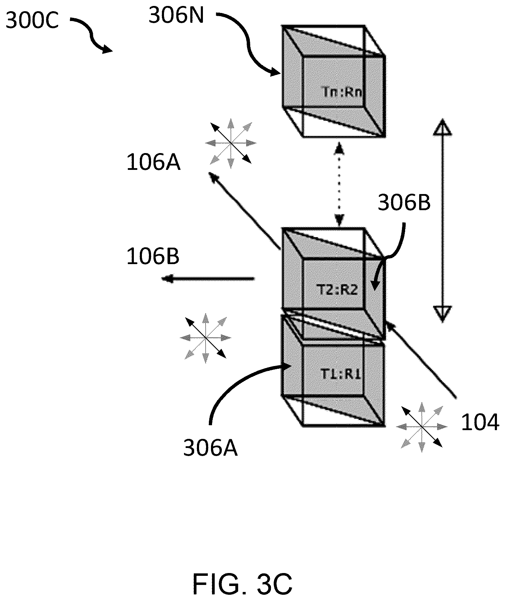

Figure 3C illustrates an adjustable beam separator 300C comprising a beamsplitter array. The beamsplitter array comprises a plurality of segments 306A to 306N linearly aligned, where each segment 306A to 306N comprises a beamsplitter configured to transmit and reflect incident light with a transmission to reflection ratio (T:R), being the separation ratio of the adjustable beam separator. The beamsplitter of each segment is fabricated to provide a different T:R ratio such that when the incoming optical signal is incident upon the segment beamsplitter the incoming optical signal will be separated in a ratio according to the T:R ratio for the segment beamsplitter. For example, as shown in Figure 3C, each segment beamsplitter may be a cube beamsplitter comprising two prisms joined at an interface with a partially reflective coating provided at the interface. The beamsplitter array is mounted on a motorized translation mount so as to translate the beamsplitter array to place one of the segment beamsplitters into the path of the incoming optical signal. Each segment beamsplitter may be arranged such that the incoming optical signal is provided at the same angle of incidence (AOI) to the interface of the prisms.

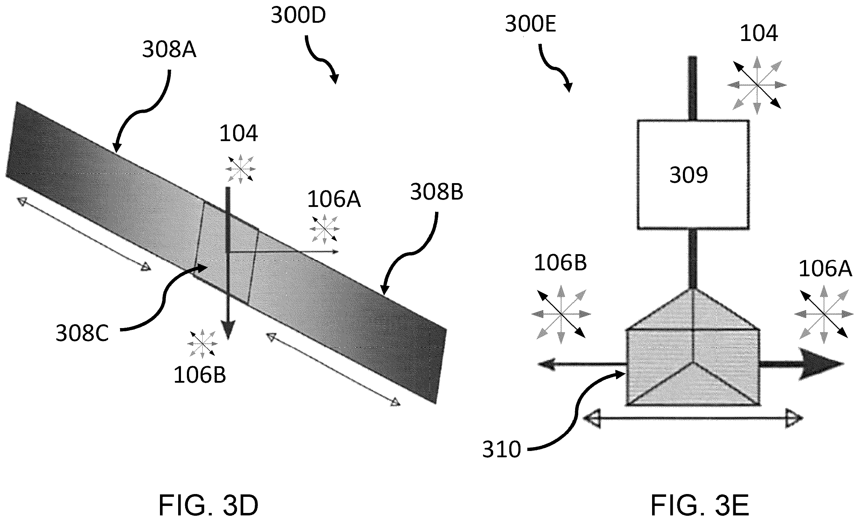

Figure 3D illustrates a further example adjustable beam separator 300D according to some embodiments, and which may be deployed as the adjustable beam separator 102 described above. In these embodiments, the adjustable beam separator comprises a first segment 308A that is partially reflecting (e.g. segment 308A comprises a partially reflecting mirror) and a second segment 308B that is partially reflecting (e.g. segment 308B comprises a partially reflecting mirror). The first segment 308A and second segment 308B are configured to overlap to provide an overlapping partially reflective region 308C with a beam separation ratio in the path of the optical signal 104. The adjustable beam separator 300D is configured such that the overlap between the first segment 308A and the second segment 308B is continuously adjustable. Furthermore, the first segment 308A and second segment 308B are configured such that the beam separation ratio provided in the overlapping partially reflective region 308C is constant within the overlapping region and furthermore varies according to the overlap.

In the example of Figure 3D, the first segment 308A and second segment 308B each comprise a rectangular partially reflecting mirror, the partially reflecting mirrors of the first and second segments being aligned to overlap along the length (the longest side) of the rectangle, and are each configured to translate along the longest side of the rectangle to adjust the extent of the overlap. Each of the first mirror of the first segment 308A and second mirror of the second segment 308B may be attached to a motorized translation mount, for example. Each of the first mirror and second mirror may be configured to have a partially reflecting coating to provide a T:R ratio that varies continuously along the length of the mirror. The continuously varying T:R ratios are configured to be complementary such that the resulting T:R ratio at the overlapping region is constant across the overlapping region, and the value of the T:R ratio increases with the extent of the overlap. For example, each of the first mirror and second mirror have the same linear variation in T:R ratio increasing from a first end of the mirror to the second end of the mirror. The mirrors are arranged along a linear direction such that the T:R ratio of the first mirror decreases in the linear direction and the T:R ratio of the second mirror increases in the same linear direction, and the first and second mirror are arranged to overlap along the linear direction. To increase the overlap, the first mirror is arranged to translate in the direction running from its second end to its first end (i.e. of decreasing T:R ratio of the first mirror) and toward the second mirror, and the second mirror is arranged to translate in the direction running from its second end to its first end (i.e. along the direction of decreasing T:R ratio of the second mirror) toward the first mirror 308A. As such, the sum of the T:R ratios at any point in the overlapping region results in the same total T:R value.

Figure 3E illustrates a further example adjustable beam separator 300E according to some embodiments, and which may be deployed as the adjustable beam separator 102 described above. In these embodiments, the adjustable beam separator 300E comprises a spatial filter 309 configured to receive the optical signal 104 and perform spatial filtering to remove higher order spatial modes of the optical signal 104 to provide a single spatial mode. For example, the spatial filtering may include mixing of the spatial modes to produce the single spatial mode. The adjustable beam separator further comprises an adjustable spatial sampler 310 configured to receive the spatially redistributed signal from the spatial filter and perform variable spatial sampling on the spatially redistributed signal.

For example, and as shown in Figure 3E, the adjustable spatial sampler 310 is a prism with outer metallic coating (or wedge mirror) configured such that the optical signal is incident on an edge of the prism (e.g. at an angle of incidence, or AOI, of 45 degrees). Due to the spatial distribution of the beam, the incoming light incident upon the edge will split into different directions (with the portion of the beam incident on one side the of the edge being reflected in one direction and the other portion of the beam incident on the other side of the edge being reflected in a second direction). The adjustable beam sampler 310 thus separates an incoming optical signal according to a beam separation ratio. The adjustable beam separator 300E is further configured such that the prism can be translated (e.g. via a motorized translation mount) to adjust the position of the edge within the spatially distributed beam to adjust the separation ratio.

In the context of QKD, separating selected basis states according to spatially sampling optics alone may compromise the security of the transmitted information. This is because the selected basis states may be distinguishable by an eavesdropper due to their spatial separation, and thus a side channel attack may be possible. To reduce this vulnerability, the adjustable beam separator 300E includes the spatial filter 309 configured to perform spatial filtering on the incoming optical signal prior to the signal being passed to the adjustable spatial sampler 310. The spatial filtering generates a single spatial mode as an output signal. For example, the spatial filtering can include a spatial redistribution of the incoming signal, thereby mixing up the signal to remove any correlation between the chosen encoded basis and the spatial distribution of the beam.

As compared to partially reflecting surfaces, the adjustable beam separator 300E provides improved wavelength and polarization indistinguishability inherently, which improves the security of any QKD apparatus that implements the adjustable beam separator 300E.

In some embodiments, the adjustable beam separator comprises a low birefringent waveguide coupler configured to couple an optical input into the two optical outputs. The waveguide coupler comprises two separated waveguides, with the separation ratio of the coupler depending upon the separation of the two waveguides. The separation distance may be adjusted mechanically or thermally, thus tuning the beam separation ratio.

The above-described examples of the adjustable beam separator 102 are each configured to separate an incident beam into two components at a probability set by the controller, by adjusting beam separation ratio. Each of the separated components are directed into a different optical apparatus of a detector assembly, each optical apparatus configured to measure incident light in one of two quantum computational bases. Thus, the quantum communication device 100 is configured to measure in each of the two bases according to the usage probability ratio.

Figure 4 illustrates the implementation of a detector assembly 108 according to embodiments. In these embodiments, the detector assembly 108 comprises a first polarization detector 108A configured to measure incident encoded light in a first basis and a second polarization detector 108B configured to measure incident encoded light in a second basis. The first polarization detector 108A comprises a first photon detector 402A and a first polarization beam splitter 404A. The first polarization beam splitter configured to split the first signal 106A into a first signal component (having a first polarization in the first polarization basis) and a second signal component and to direct the first signal component into the first photon detector 402A.

As illustrated in Figure 4, the first detector 108A comprises a second photon detector 402B. In some examples, the first polarization beam splitter 404A may be configured to direct the second signal component directly into the second photon detector 402B. However, in some embodiments, the first detector 108A further comprises a second polarization beam splitter 404B and a second photon detector 402B. The first polarization beam splitter is configured to direct the second signal component into the second polarization beam splitter 404B. The second polarization beam splitter 404B is configured to split the second signal component into a third signal component and a fourth signal component and to direct the third signal component into the second photon detector 402B. The fourth signal component is reflected away from the detector assembly 108 to minimise background interference.

The first polarization beam splitter 404A and the second polarization beam splitter 404B are configured with a fixed orientation with respect to one another. The first polarization beamsplitter 404A is configured to transmit a first polarization (and direct the transmitted light into the first photon detector 402A) and to reflect a second polarization (and direct the reflected light into the second polarization beamsplitter 404B). The second polarization beamsplitter 404B is configured to transmit the second polarization (and direct the transmitted light into the second photon detector 402B) and to reflect the first polarization. Thus, the first photon detector 402A will register a count when a photon is encoded in the first polarization, and the second photon detector 402B will register a count when a photon is encoded in the second polarization. The first polarization and the second polarization are states of the first basis.

By providing the polarizing beam splitters 404A and 404B in the described configuration, QKD protocols may be conducted at different wavelengths without disturbing the beam alignment and can optimise the polarization extinction ratio.

By directing a signal component through the second polarization beam splitter 404B before entering the second photon detector 402B, the first polarization detector 108A provides an improved Polarization Extinction Ratio (PER) for the polarized light to be directed into each of the polarization detectors. The PER is a ratio of polarizations present in a signal components after separation. For example, in a polarization beam splitter that is configured to transmit horizontally polarized light and reflect vertically polarized light, the beam splitter will not perfectly reflect and transmit the different polarizations. A small component may remain in each arm, meaning that the transmitted light will have a small component of vertically polarized light alongside the horizontally polarized light at a ratio of transmitted extinction ratio of H1:V1, and the reflected light will have a small component of horizontally polarised light alongside the vertically polarized light, at a reflected extinction ratio of V2:H2.

For polarizing beam splitters, the reflected extinction ratio is lower than the transmitted extinction ratio, which means that by simply connecting the outputs of the first polarizing beam splitters into photon detectors, the counts registered at each detector may not accurately reflect the polarization state that the detector is intended to measure. The PER of the reflected beam (i.e. the second signal component of Figure 4) may be enhanced by the second polarization beam splitter. The second polarization beam splitter is configured to transmit the polarization that was reflected by the first polarization beam splitter, again with an extinction ratio. Unwanted polarizations are therefore reflected by the second polarization beamsplitter and not directed into the second photon detector. The presence of the polarizing beam splitters within each arm furthermore removes in-band photons with unwanted polarizations from the main beam-line of the detector. Thus, in-band background noise filtering is provided to minimise interference of background light.

An example beamsplitter apparatus 404 is shown in Figure 4B, the beamsplitter apparatus comprising the first polarization beamsplitter 404A and the second polarization beamsplitter404B. In this example, first polarization beamsplitter404A and the second polarization beamsplitter 404B are broadband polarization beam splitters oriented such that the incoming signal (e.g. first signal 106A) is at a fixed angle of incidence to the first polarization beamsplitter 404A (e.g. a 45 degree angle), with a reflected signal from the first polarization beamsplitter 404A being directed toward the second polarization beamsplitter 404B at a fixed incident angle (e.g. a 45 degree angle), where the first polarization beamsplitter 404A is configured to transmit a first polarization and reflect a second polarization and the second polarization beamsplitter 404B is configured to transmit the second polarization and reflect the first polarization.

In alternative embodiments, the second polarization beamsplitter may be a Glan-Taylor calcite polarizer, in which the polarization extinction ratio is enhanced and maintained over a broad optical spectrum.

As shown in Figure 4A, the second polarization detector 108B is configured in the same manner as the first polarization detector 108A, and the configurations described above for the components of the first polarization detector 108A may also be implemented for the second polarization detector 108B. For example, the second polarization detector 108B comprises a third photon detector 406A and a third polarization beam splitter 408A, the third polarization beam splitter configured to split the second signal into a fifth signal component and a sixth signal component and to direct the fifth signal component into the third photon detector 406A. The second detector 108B may further comprises a fourth polarization beam splitter 408B and a fourth photon detector 406B, wherein the third polarization beam splitter 408A is configured to direct the fourth signal component into the fourth polarization beam splitter 408B, wherein the fourth polarization beam splitter 408B is configured to split the fourth signal component into a seventh signal component and an eighth signal component and to direct the seventh signal component into the fourth photon detector 406B. Thus in the same manner as described above for the first polarization detector 108A, the second polarization detector 108B may be configured to perform PER optimisation on the received signal 106B by directing the sixth signal component to the fourth polarization beamsplitter. As described above in connection with the first polarization detector 108A, an alternative implementation of the second polarization detector 108B includes directing the sixth signal component directly into the third photon detector 406A.

One or more wave plates 410 may be provided in the second arm before the second polarization detector 108B, to rotate the polarization of the signal 106B to align the polarization with the second polarization detector 108B. Alternatively the second polarization detector 108B may be configured with an alignment such that the one or more wave plates 410 are unnecessary.

Each of the photon detectors described herein may be single photon detectors. Each of the photon detectors may also be a free-space coupled detector 470 such as that shown in Figure 4C or a fiber-coupled detector 490 coupled to a collimator 480 via an optical fiber 485, the collimator 480 configured to receive the optical signal via free space and couple the signal to the optical fiber 485.

While the embodiments described above are polarization detectors configured to measure in a polarization encoded basis, it is understood that alternative detectors can be provided within the detector assembly 108 and configured to measure according to other properties of encoded light. For example, each of the detectors may be configured to measure phase encoding, or each of the detectors may be configured to measure time-bin encoding.

As illustrated in Figure 4A, in some embodiments the controller 110 is configured to receive information from the detector apparatus 108 and use the information to adjust the adjustable beam separator 102 to update the beam separation ratio in a feedback loop. In these embodiments, the quantum communication device is configured to determine a further ratio, the further ratio being a ratio of a total photon counts of the first arm to the total photon counts of the second arm (e.g. a ratio of the intensity of the first signal measured by the first detector 108A and a total intensity of the second signal measured by the second detector 108B). The measured intensities in each arm may be the intensities measured for a single received pulse of encoded photons - i.e. when the number of photons per pulse is >>1. For example, a reference pulse may be received by the quantum communication device, the reference pulse containing a large number of photons (thus being a bright reference pulse having a number of photons >>1) that will be split into the two arms according to the separation ratio. The relative intensities of the split portions of the reference pulse is then used to determine the splitting ratio. In these examples, the quantum communication device may be configured to perform a QKD session with a transmitter where reference pulses are periodically transmitted to the receiver to perform real-time tuning of the beam separation ratio. Alternatively, the intensities measured across a finite time length (e.g. accumulation of counts for a series of pulses). The ratio of total measured counts in each detector 108A and 108B indicates the number of photons that have been split into each output path of the adjustable beam separator 102 and thus is a measurement of the adjustable separation ratio.

The detector assembly 108 is configured to transmit a signal to the controller based on the determined intensity. In some embodiments, the total counts are sent to the controller 110 by means of a signal 114 and the controller is configured to perform the determination of the intensity ratio. Alternatively, the ratio may be determined by a processor at the detector assembly 108 or at another component separate to the controller 110 and provided to the controller 110.

The controller 110 is further configured to determine a difference between the intensity ratio and the value for the usage ratio of the two bases, and to control the adjustable beam separator 102 so as to adjust the beam separation ratio to correct the determined difference (such as to increase or decrease the beam separation ratio to reduce the difference). The controller 110 and the detector assembly 108 are configured to operate in a feedback loop where values of the intensity ratio are continuously provided to the controller 110 and difference between the usage ratio and the intensity ratio are monitored and corrected to adjust the intensity ratio toward the usage ratio. For example, the feedback loop may operate a proportional control loop, a Proportional-Integral loop or a Proportional-Integral-Derivative (PID) control loop.

In these embodiments the quantum communication device 100 is configured to perform fine tuning of the adjustable beam separator 102, for example to mitigate deviations of the intensity ratio from the usage ratio that may result from the physical environment.

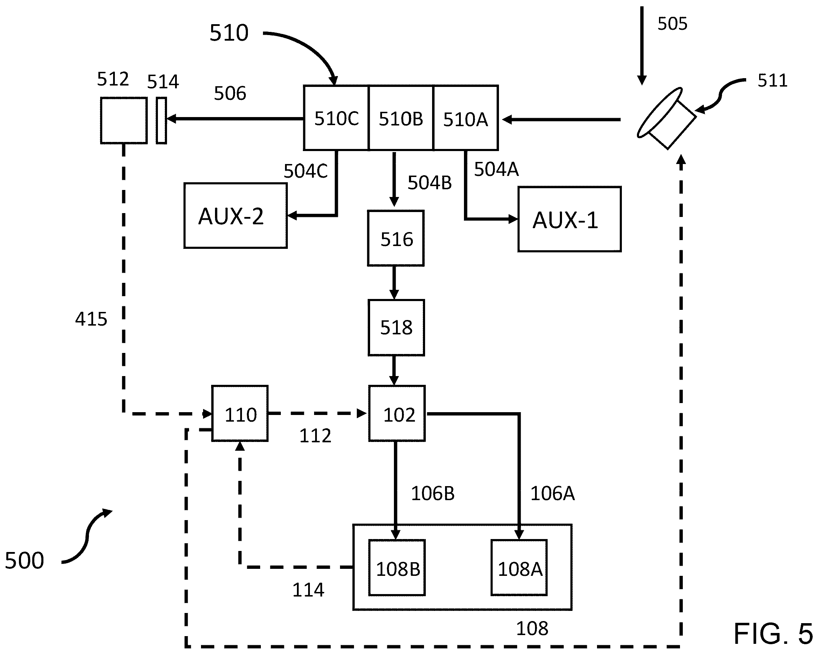

Figure 5 illustrates an optical system 500. The optical system 500 includes a quantum communication device in accordance with any of the examples described above. While a simplified schematic of the first detector 108A and second detector 108B is shown, it is understood that a detector apparatus 108 as described above in relation to Figure 4A can also be included in the optical system 500. In addition, the optical system comprises a multi-band beam separator 510, being a beam separator that is configured to separate an incoming optical signal into separate optical bands. The optical system 500 further comprises a beam-steering device 511 such as a steering mirror. The beam steering device 511 is configured to receive an incoming optical signal 505 and to output the incoming optical signal to the multi-band beam separator 510.

The incoming optical signal 505 may comprise a plurality of optical signals of different wavelengths. The plurality of optical signals are collimated and aligned along a single optical axis. For example, the incoming optical signal 505 may include four optical signals $\lambda_1$, $\lambda_2$, $\lambda_3$, and $\lambda_B$ such that a combined optical signal $\lambda_T$ may be defined as:

$$\lambda_T = \lambda_1 + \lambda_2 + \lambda_3 + \lambda_B$$

Each optical signal may carry information. For example, the information may be encoded in amplitude, phase, polarization and/or spatial mode. The beam steering device 511 is also configured to output the incoming optical signal 505 to the beam separator 510. For example, the beam steering device is angled to reflect the incoming optical signal 505 into the beam separator 510. The beam steering device 511 may be configured to reflect light across a broad optical spectrum (including the above-described wavelength ranges of the optical bands; for example 200nm - 1700nm), including light in the visible spectrum, infrared spectrum and near infrared spectrum.

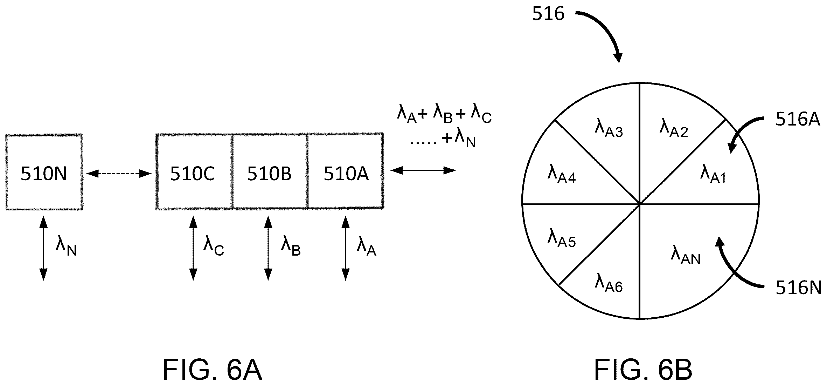

The beam separator 510 is adapted to separate the incoming optical signal 505 into a plurality of optical bands/optical channels/wavelength bands. In an embodiment, the beam separator 510 is adapted to separate the incoming optical signal 505 into a first signal 504A in a first optical band (e.g. $\lambda_1$), a second signal 504B in a second optical band (e.g. $\lambda_2$), a third signal 504C in a third optical band (e.g. $\lambda_3$), and an input beacon signal 506 in a fourth optical band (e.g. $\lambda_B$). While four signals in four different optical bands are illustrated in Figure 4, it is understood that the beam separator 510 may be configured to separate the signal into fewer or more optical bands. For example, the beam separator may be configured to separate the incoming optical signal into a single optical signal 504B and a beacon signal 506, or the beam separator is configured to separate the incoming optical signal into N separate optical bands, as illustrated in Figure 6A (with each band corresponding to a separate wavelength or wavelength range $\lambda_A$ to $\lambda_N$). The signal directed into the quantum communication device may be the primary signal and each of the signals directed into an auxiliary device may be an auxiliary signal.

In some embodiments, the beam separator 510 comprises a plurality of beamsplitters. For example, as shown in Figure 5, the plurality of beamsplitters may comprise a first beamsplitter 510A, a second beamsplitter 510B and a third beamsplitter 510C. The first beamsplitter may be a first wavelength sensitive beamsplitter configured to separate the incoming signal 505 into the first signal 504A and a first intermediate signal. The first intermediate signal is directed into the second beamsplitter 510B, which may be a wavelength sensitive beamsplitter, which separates the first intermediate signal into the second signal 504B and the a second intermediate signal. The second intermediate signal is directed into the third beamsplitter 510C, which may be a wavelength sensitive beamsplitter, which separates the first intermediate signal into the third signal 504C and the beacon signal 506. Wavelength sensitive beamsplitters may each be, for example, a dichroic mirror or filter adapted to selectively transmit and reflect incoming light.

When the plurality of beamsplitters comprises one or more wavelength sensitive beamspltiters, the beam separator is configured to operate as a demultiplexer to separate a signals into a plurality of separate optical bands. Each optical band may be associated to a different device (the quantum communication device 100, the auxiliary devices and the tracking system 512) such that the beam separator will direct signals within different optical bands toward a respective device associated with that band. The beam separator may function as a coarse multiplexer performing Coarse Wavelength Division Multiplexing (CWDM) in which each optical band may span a wavelength range defined by the optical band used for the communication channel. These may include the IR, NIR and VL band (as well as optical bands within the IR spectrum of 1200nm - 1700nm, including the O-band, the E-band, the S-band, the C-band, the L-band and the U-band). Optical bands may also be more generally selected through choice of wavelength endpoints separated by hundreds of nanometres, for example 400nm or 500nm (so for a range of wavelengths of 400nm - 1700, the beam separator may divide the signal into optical bands of 400nm - 800nm, 800nm - 1200nm and 1200nm 1700nm). In some embodiments of the optical system 500, the first optical band is an infrared wavelength band and/or a near-infrared wavelength band, the second optical band is an infrared wavelength band, a near-infrared wavelength band and/or visible light wavelength band; and the third optical band is a visible light wavelength band.

The broad optical range (spanning NIR, IR and visible) enables the optical system to provide a variety of end-user applications and be compatible with a variety of technologies that may use signals anywhere within the broad optical band. For example, the transmitter(s) may be configured to transmit encoded light in the near infrared (NIR) region of the spectrum for quantum channel. In this region, low cost avalanche photo detector based single photon counting modules (SPCM) with sufficiently good detection efficiency and low dark-count rates can be deployed.

Providing multiple different optical signals for each communication channel allows the system to select an optical band to minimise background light levels. For example, daytime operation of optical communication be implemented using IR channels which perceive lower background light levels than NIR. For example, information may be transmitted over both the classical and quantum communication channels, with the beam separator performing coarse multiplexing to split an IR optical band into two smaller subbands in the IR optical band. In some embodiments, NIR signals may be processed during night time operation, using NIR detectors, which have lower dark count rates and higher detection efficiency when operated at room temperature. In these embodiments, signal processing can be performed by a signal processing component of the quantum communication device 100 or the auxiliary devices to remove background light levels and improve the signal to noise ratio. Furthermore, IR, NIR or VL wavelengths have a low beam divergence, meaning lower losses when data packets are transmitted over long distances. As such, lower levels of background light are received and a higher signal-to-noise ratio required. Satellite QKD networks using the optical devices described herein may thus operate during day and at night for maximum utilization of the service and minimize potential capacity bottleneck.

The beam separator 510 is adapted to output one of the output optical signals 504A - 504C to the quantum communication device 100 (either directly or via additional optical components such as a wavelength filter 516 and one or more wave plates 518, to be described later). Figure 5 illustrates the second signal 504B as being directed to the quantum communication device 100, but this is merely illustrative. The second signal 504B is the encoded light signal previously described and the quantum communication device 100 functions as previously described to decode received information.

The optical system 500 may further comprise one or more auxiliary systems, such as auxiliary system AUX-1 or auxiliary system AUX-2. The beam separator 510 is further configured to respectively direct one of the separated output signals into each of the auxiliary systems. The optical system may comprise one auxiliary system for each beam signal that is separated by the beam separator 510. The optical system 500 may further comprise a tracking system 512, and the beam separator is configured to output the beacon signal 506 to the tracking system 512 (either directly or via a bandpass filter 514).

Each of the auxiliary systems may be configured with different functionality. In some embodiments, one or more of the auxiliary systems is a classical communication subsystem configured to perform classical communications and thus provide a classical communication channel between a transmitter and the optical system 500. This classical communication channel may be deployed alongside the quantum communication device 100, for example, to perform the classical communication steps of a QKD protocol (e.g. to transmit the agreed-upon bases). The classical communication channel may also be used for transmission of the communication parameters or satellite apparatus parameters as described above.

Additionally or alternatively, each of the auxiliary systems may be configured as a separate quantum communication device 100 in the manner described herein. In these embodiments, the optical device is able to receive multiple streams of quantum information within a single optical signal 105. For example, AUX-1 may be a classical communication device and AUX-2 may be a further quantum communication device, where the classical channel is used to exchange information related to each of the quantum communication devices in the optical device to perform a plurality of QKD protocols. If more than one quantum communication device is present within the optical system, each device may be configured to receive a different signal on a different optical band from the beam separator 510, improving the flexibility of the system.

While the above-described examples disclose the use of multiple communication channels multiplexed within a single incoming optical signal 505, the optical system 500 may be configured to receive additional optical signals via an additional receiver, such as a separate transceiver or antenna.

In some embodiments, one of the auxiliary systems may comprise a channel estimator. The channel estimator is configured to estimate properties of the communication channel of the optical signal. The channel estimation may include polarisation estimation and wavefront error estimation. For example, the channel estimator may comprise a phase sensitive array such as a Shack-Hartmann wavefront sensor. The phase sensor array is configured to detect wavefront distortion due to propagation in atmosphere, and for detection of pointing error (caused by dynamic fluctuations to the wavefront). Also by way of example, the polarisation estimation may be performed by maximising power through a linear polariser, such as a set of birefringent waveplates (quarter-, half-, quarter-wave), or via a crystal variable retarder. The channel estimation may be performed by comparing received signals with stored reference parameters. The channel estimator may use the result of the channel estimation to perform corrections on the beacon signal (for example, to refine the determination of the bacon position or the power of the beacon).

The channel estimator is configured to receive an input signal from a beamsplitter of the plurality of beamsplitters that is not wavelength sensitive. For example, the first beamspliter 510A can be configured to be a wavelength-independent beam separator, and AUX-1 being the channel estimator, meaning that the channel estimator receives a portion of the entire incoming signal 505. Channel estimation may thus be performed on the entire signal. Similarly, the last beamspliter 510C (or 510N) can be configured to be a wavelength-independent beam separator, and AUX-2 being the channel estimator, meaning that the channel estimator receives a portion of the beacon signal 506. Channel estimation may thus be performed on the beacon signal only. In each case, the wavelength-independent beam separator may have a power separation ratio such that only a portion of the entire signal (or beacon signal) is separated from the beam and directed toward the channel estimator.

The tracking system 512 is adapted to determine an alignment of the beacon signal 506 based on at least a portion of the input beacon signal 506. Based on the determination of the alignment, the tracking system 512 controls the beam steering apparatus 511 to adjust the beacon signal alignment based on the determination. For example, the tracking system 510 may generate a control signal 415 and output the control signal 415 to the beam steering apparatus 511 to adjust the position or configuration of beam steering apparatus 511. As shown in Figure 5, this signal may alternatively be provided to the controller 110, with the controller being configured to control the beam steering apparatus 511 to make the adjustment. In response to the adjustment of the position or configuration, the alignment of the incoming optical signal 105, including the beacon signal 506, will be adjusted. Further determinations of the alignment of the beacon signal may be performed by the tracking system 512 to continuously monitor and adjust the alignment of the beacon signal. In this manner, the tracking system 512 and the beam steering apparatus 511 (and optionally the controller 110) form a closed loop control signal to achieve fine tracking of the incoming optical signal 105.

The beacon signal 506 co-propagates with the other beams. The beacon signal may be a continuous wave, or may be pulsed. The beacon signal may also be modulated for application specific requirements such as synchronization and/or classical communication.

In some embodiments, the tracking system 512 comprises one or more sensors configured to receive at least a portion of the beacon signal. For example, and as described above, the final beamsplitter 510N of the plurality of beamsplitters is configured to separate a received intermediate signal into two portions of the same wavelength, with one portion directed toward the tracking system 512 and the other portion directed toward an auxiliary device (e.g. a channel estimator for performing channel estimation on the beacon signal channel). The one or more sensors may include a position sensor. The position sensor is configured to determine an axial position of the input beacon signal. In an embodiment, the position sensor is a camera configured to capture images of received light, including the beacon signal. The position sensor receives the beacon signal and determines a position of the received beacon signal in the plane of the received image and with respect to the optical axis of the optical device. The position sensing system may use optical sensor(s) or radio sensor(s) or both types of sensors.

The tracking system 512 is configured to then determine a position offset between the determined position of the beacon signal 506 and a reference position in the image plane. The control signal 415 is then generated based on the determined position offset and sent to the beam steering device 511 (or is generated by the controller 110 after receiving or determining the determined position offset). For example, the generated control signal is a control signal that provides instructions to the beam steering device 511, to adjust a configuration of the beam steering device 511 so as to adjust an axial position of the reflected incoming beam signal by an amount corresponding to the position offset determined by the position sensor. The determination of the position offset and the generation of the control signal 415 may be performed by a separate beacon controller forming part of the tracking system 512.

The tracking system 514 is configured to continually monitor the position of the received beacon signal 506, determine a position offset and provide further control signals to the beam steering device 511. In this manner the axial position of the beacon is continually monitored and updated, such that the tracking system is configured to control the beam steering device 511 to adjust the axial position of the input beacon signal in a closed loop with the position sensor to align the axial position of the input beacon signal with a reference axial position.

The one or more sensors may also include a power sensor configured to determine a power of the input beacon signal 506. In an embodiment, the power sensor is a sensor configured to determine an intensity of received light, including the received beacon signal portion. The power sensor receives a portion of the beacon signal and determines the intensity of the received beacon signal portion.

The tracking system 512 is configured to then generate a control signal 415 to provide instructions to the beam steering device (or via the controller 110 in the same manner as described above) to adjust a configuration of the beam steering device. The change in beam steering device 511 configuration will adjust an axial position of the reflected incoming beam signal, changing an axial alignment between the beacon signal and the power sensor, and thus changing the power level determined by the power sensor.

The tracking system 512 is configured to continually monitor the power of the received beacon signal and provide updated control signals to the beam steering device 511 to maximise the power of the beacon signal received by the power sensor. For example, the tracking system 512 may analyse the received power to determine a change in determined power, and a rate of change of determined power, and apply statistical methods to generate control signals to identify a local maxima. In this manner, the tracking system 512 is configured to control the beam steering device 511 to adjust the power of the input beacon signal in a closed loop with the power sensor to maximise the determined power. The determination of the power of the input beacon signal and the generation of the control signal may be performed by the separate beacon controller forming part of the tracking system 512.

Since the tracking system 512 is contained within the same, compact optical device as the quantum communication device and auxiliary systems, and the beacon signal co-propagates and is axially aligned with the optical signals carrying information, the optical device is able to minimise misalignment between the optical device and the optical signals that might otherwise arise due to spatial separation between the tracking beacon and application-related beams.

In addition to the tracking system 512, or as an alternative to the tracking system 512, the optical device 500 may be configured to steer the beam steering device in a feedback loop with the detector assembly 108. In these embodiments, the quantum communication device 100 is configured to determine the total measured photon counts in the detector assembly 108, including determining a total number of counts in the first arm and the total photon counts of the second arm (e.g. the total intensity of the first signal measured by the first detector 108A and a total intensity of the second signal measured by the second detector 108B). The total measured intensities in each arm may be the intensities measured for a single received pulse of encoded photons - i.e. when the number of photons per pulse is >1. For example, a reference pulse may be received by the quantum communication device, the reference pulse containing a large number of photons (thus being a bright reference pulse having a number of photons >>1) that will be split into the two arms according to the separation ratio. The total intensities of the split portions of the reference pulse is then used to determine the total measured intensity. In these examples, the quantum communication device may be configured to perform a QKD session with a transmitter where reference pulses are periodically transmitted to the receiver to perform real-time tracking according to the measured intensity. Alternatively, the intensities measured across a finite time length (e.g. accumulation of counts for a series of pulses). The sum of total measured counts in each detector 108A and 108B indicates the total received power of the quantum communication device 100.

The detector assembly 108 is configured to transmit a signal to the controller based on the determined intensity. In some embodiments, the total counts are sent to the controller 110 by means of a signal 114 and the controller is configured to perform the determination of the total intensity. Alternatively, total intensity may be determined by a processor at the detector assembly 108 or at another component separate to the controller 110 and provided to the controller 110.

The controller 110 is further configured to determine a difference between the total intensity and a target intensity, and to control the adjustable beam separator 102 so as to adjust the beam steering device 511 to correct the determined difference (such as to adjust the angle of the beam steering device to reduce the difference). The controller 110 and the detector assembly 108 are configured to operate in a feedback loop where values of the total intensity are continuously provided to the controller 110 and difference between the total intensity and a target intensity are monitored and corrected to adjust the total intensity toward the target intensity. For example, the feedback loop may operate a proportional control loop, a Proportional-Integral loop or a Proportional-Integral-Derivative (PID) control loop. In some embodiments a target intensity is not used and the controller is configured to compare the received total intensity with a previously received value for the total intensity, determine a difference (i.e. a drop in intensity) between the received value and a previously received value, and adjust the beam steering device 511 to correct the difference. Thus, the optical device is able to correct drift from a given value to maintain maximum received power, and thus implement fine tracking of a transmitter providing the input signal.

If the beam steering device 511 is misaligned with the incoming signal, the resulting total measured counts may not only be lower, but the observed ratio in measured intensities at the first detector 108A and 108B may deviate from the target usage ratio of the received usage ratio value (for example, due to imbalanced reflection of polarizations at the beam steering device 511). Thus, as a result of adjusting the beam steering device 511 to align the optical system 500 to a transmitter (by maximise the total received counts and/or tracking the beacon signal), the split ratio of bases measured by the quantum communication can also be maintained.

The beam-steering device may use a steering mirror (or steering mirrors). The steering mirrors may be based on gimbals or piezo-electric stages. Mirror-based beam steering systems have high reflection efficiencies and thus provide an operation over a broad optical spectrum. The control signal provided by the tracking system may be configured to control the actuation of the gimbal steering mirrors or to control the position of the piezo electric stages. Piezo-electric stages beneficially provide a low latency response time upon receiving a control signal. In an embodiment, fast steering mirrors are used in the beam-steering assembly. Steering mirrors provide a wide Field of View (FoV), and as such may receive incoming optical beams incident across a wider range of angles than other beam steering devices (e.g. diffraction gratings). A steering mirror may also be deformable in response to a control signal to control direction of reflected light as well to adjust the wavefront of the reflected light.

Fast steering mirrors provide very fast actuation response times (e.g. millisecond response times) to provide fast steering speeds. Additionally, the one or more sensors may measure with a very fast response time (e.g. millisecond response times), and may be configured with cameras to capture images at a high framerate (e.g. millisecond frame rates), and the signal processing performed by the tracking system may be performed at a high speed. Thus, the power and position of the received beacon signal can be repeatedly measured and processed, with the steering mirror adjusted, at very low latency, thus providing for very low latency beam tracking. In one embodiment, the beamsteering device includes a piezo-electric tip/tilt actuator based bi-directional steering and high fame rate camera or high bandwidth position sensitive detector to minimise the tracking latency.

In some embodiments, a single steering mirror is used, leading to reduced size and weight. Since a single steering mirror is used to steer a beam comprising multiple communication channels, the size and weight is further reduced as compared to a system with steering mirrors for each communication channel.

The beam-steering device may alternatively use spatial light modulators (SLM), phased arrays or diffraction gratings. SLMs and diffraction gratings enable multiplexing and point-to-multipoint operations.

In some embodiments, the beam separator may be bi-directional, such that the beam separator 510 also functions as a beam combiner. In this embodiment, the beam separator is configured to receive a plurality of optical signals within a respective plurality of optical bands, and to combine the plurality of optical signals into a single output signal. The beam separator 510 is configured to out the single output signal to the beam steering device 511 for transmission of an output signal. In these embodiments, one or more devices may provide optical signals to the beam separator 510. For example, the beam separator receives a signal from each of the auxiliary systems AUX-1 and AUX-2 and transmits the signal to one or more satellites. In these embodiments each of the auxiliary systems may comprise a light source, or may comprise couplers for coupling of the auxiliary devices to light sources.

In some embodiments, the quantum communication device 100 can include a filter 516 configured to receive light (e.g. the optical signal comprising the encoded light, which may be received via the beam steering apparatus 511 and beam separator 510 described above) and to output filtered light to the quantum communication device 100 (either directly or via additional elements such as one or more wave plates 518). The filter 516 is configured to perform bandpass filtering to allow passage of a wavelength or wavelength range and block light having wavelengths outside the range. Furthermore, by using the filter 516, background light interference with received encoded photons may be minimised.

The encoded light received by the quantum communication device 100 for decoding may originate from a quantum source (e.g. onboard a satellite) that is configured to operate at a specific wavelength. By providing the beam separator 510 and the filter 516 prior to the quantum communication device 100, the encoded light can be filtered to the wavelength used by the quantum source in a manner that minimises background interference from unwanted wavelengths. Thus the quantum communication device 100 can be adapted to the usage requirements of a particular quantum source. In these embodiments the beam separator 510 may be configured to be adjustable operates as a form of coarse wavelength filtering and the filter 516 implements fine wavelength filtering. For example, the beam separator 510 separates a NIR signal from the incoming signal for receipt by the quantum communication device 100 and the filter 516 further filters the signal to produce a NIR signal within a sub-band of the NIR band.

The communication parameters described above may further comprise an indication of the wavelength of the encoded light transmitted by the transmitter and to be received by the quantum communication device 100. The controller 110 may be further configured to adjust the filter 516 according to the received parameters to select one of the chosen wavelengths or wavelength ranges. In some embodiments, the filter 516 may be configured allow interference filtering. The filter 516 can be produced from a number of interference filters with different pass-band (filters 516A to 516N), cut to a specific shape (such as a sector) and attached (e.g. glued) together. Figure 5B illustrates an example filter 516 in accordance with these embodiment. The filter 516 may include a motorized rotation mount upon which the assembled interference filters are attached and configured to rotate the filter assembly to place one of the filters into the path of the incoming optical beam so as to provide a filtering at a chosen wavelength. The filter assembly may alternatively be assembled from a rectangular array of interference filters mounted to a motorized translation mount.

As mentioned above, there may also be an additional bandpass filter 514 provided before the tracking system 512. The bandpass filter 514 may be configured in the same manner as described above for filter 516.

The quantum communication device 100 may further comprise one or more polarization rotator elements 518, such as one or more waveplates. The one or more polarization rotation elements 518 are configured to rotate the polarization of incoming light without loss of intensity. The polarization rotator elements 518 are arranged prior to the detector assembly 108 and are configured to align the polarization of the incoming light to align the incoming light to the polarization detectors 108A and 108B of the detector assembly 108.

The controller 110 described herein may be a computing device comprising one or more processors and may be communication with one or more memories to store and retrieve information. The one or more processors are configured so as to execute a plurality of computer-readable instructions to perform the operations described herein. The computer-readable instructions may be obtained from a separate computing device, or provided on a non-transitory computer-readable medium. In some embodiments the controller 110 may comprise hardware such as a micro-controller of a Field Programmable Gate Array (FPGA) to run a control algorithm or process steps to control the adjustable beam separator (such as controlling motorized mounts), bandpass filter and/or the beam steering device 511 in the manner described herein.

Whilst certain embodiments have been described, these embodiments have been presented by way of example only, and are not intended to limit the scope of the inventions. Indeed, the novel devices, and methods described herein may be embodied in a variety of other forms; furthermore, various omissions, substitutions and changes in the form of the devices, methods and products described herein may be made without departing from the spirit of the inventions. The accompanying claims and their equivalents are intended to cover such forms or modifications as would fall within the scope and spirit of the inventions.

**Claims**

1. A quantum communication device comprising:

an adjustable beam separator configured to receive an optical signal comprising encoded light at an optical input of the adjustable beam separator, and configured to couple the optical input to a first output path and to a second output path according to a beam separation ratio of the adjustable beam separator; and

a controller configured to control the adjustable beam separator to adjust the beam separation ratio according to the value of a first ratio, the first ratio being a usage ratio of a first basis and a second basis used for encoding the encoded light; and

a detector assembly comprising a first detector configured to receive a first signal from the first output path and to measure the received first signal in the first basis, and a second detector configured to receive a second signal from the second output path and to measure the received second signal in the second basis.

2.   **The** quantum communication device of claim 1, wherein the adjustable beam separator comprises a plurality of segments, each segment of the plurality of segments providing a different beam separation ratio, the adjustable beam separator configured to be actuated by the controller to place a segment of the plurality of segments into the path of the optical signal,
wherein, optionally:

the adjustable beam separator comprises a circular partial reflecting mirror, wherein each segment of the adjustable beamsplitter comprises an arc segment of the circular partial reflecting mirror, and wherein the circular partial reflecting mirror is mounted on a motorized rotating mount, or
wherein the adjustable beam separator comprises a rectangular partial reflecting mirror, wherein each segment of the adjustable beamsplitter comprises a segment of the rectangular partial reflecting mirror, and wherein the rectangular partial reflecting mirror is mounted on a motorized translation mount.

3.   **The** quantum communication device of claim 1, wherein the adjustable beam separator comprises a first segment that is partially reflecting and a second segment that is partially reflecting, wherein the first segment and second segment are configured to overlap to provide an overlapping partially reflective region with a beam separation ratio in the path of the optical signal,

wherein the adjustable beam separator is configured such that the overlap between the first segment and the second segment is continuously adjustable, and
wherein the first segment and second segment are configured such that the beam separation ratio provided by the overlapping partially reflective region varies according to the overlap.

4.   **The** quantum communication device of claim 1, wherein the adjustable beam separator comprises:

a spatial filter configured to receive the optical signal and perform spatial filtering to provide a single spatial mode; and
an adjustable optical device configured to receive the single spatial mode from the spatial filter and perform variable spatial sampling on the single spatial mode.

5.   **The** quantum communication device of any preceding claim, further comprising:

a bandpass filter configured to filter the optical signal comprising the encoded light; and/or
at least one waveplate arranged before the adjustable beam separator, the at least one waveplate configured to align the polarization of the optical signal.

6.   **The** quantum communication device of any preceding claim, wherein the first detector comprises a first photon detector and a first polarization beam splitter,

the first polarization beam splitter configured to split the first signal into a first signal component and a second signal component and to direct the first signal component into the first photon detector,
wherein, optionally, the first detector further comprises a second polarization beam splitter and a second photon detector,
wherein the first polarization beam splitter is configured to direct the second signal component into the second polarization beam splitter,
wherein the second polarization beam splitter is configured to split the second signal component into a third signal component and a fourth signal component and to direct the third signal component into the second photon detector.

7.   **The** quantum communication device of any preceding claim, wherein the second detector comprises a third photon detector and a third polarization beam splitter,

the third polarization beam splitter configured to split the second signal into a fifth signal component and a sixth signal component and to direct the fifth signal component into the third photon detector,
wherein, optionally, the second detector further comprises a fourth polarization beam splitter and a fourth photon detector,
wherein the third polarization beam splitter is configured to direct the sixth signal component into the fourth polarization beam splitter,
wherein the fourth polarization beam splitter is configured to split the sixth signal component into a seventh signal component and an eighth signal component and to direct the seventh signal component into the fourth photon detector.

8.  The optical system of any preceding claim, wherein the detector assembly is configured:

to determine a second ratio, the second ratio being a ratio of an intensity of the first signal measured by the first detector and an intensity of the second signal measured by the second detector, and

to transmit a control signal to the controller based on the determined intensity, wherein the controller is further configured to control the adjustable beam separator so as to adjust the value of the second ratio toward the value of the first ratio.

9.  An optical system comprising the quantum communication device of any preceding clam, the optical system further comprising:

a multi-band beam separator,

a beam-steering device adapted to receive an incoming signal and to output the incoming signal to the multi-band beam separator,

wherein the multi-band beam separator is configured to separate the optical signal from the incoming signal and to output the optical signal to the quantum communication device.

10.  The optical system of claim 9, further comprising a tracking system;

wherein the multi-band beam separator is further configured to separate a beacon signal from the incoming signal and is adapted to output the beacon signal to the tracking system; and

wherein the tracking system is configured to determine an alignment of the beacon signal and to control the beam-steering device to adjust the beacon signal alignment based on the determination.

11.  The optical system of claim 9 or claim 10, herein the detector assembly is configured, in a feedback loop:

to determine a total intensity, the total intensity being a sum of an intensity of the first signal measured by the first detector and an intensity of the second signal measured by the second detector, and

to control the beam-steering device based on the determined intensity so as to maximise the total intensity.

12.  The optical system of any one of claims 9 - 11, wherein the multi-band beam separator is further configured to separate, from the incoming signal, a first auxiliary signal and a second auxiliary signal, wherein the optical signal is in a first optical band, the first auxiliary signal is in a second optical band and the second auxiliary signals is in a third optical band.

13.  The optical system of any one of claims 9 - 12, wherein the optical system is located on the surface of the earth, and is configured to receive the optical signal from a satellite.

14.  A method of performing quantum communication at a quantum communication device, the method comprising:

adjusting a beam separation ratio of an adjustable beam separator according to a first value of a first ratio, the first ratio being a usage ratio of a first basis and a second basis used for encoded light in an optical signal, wherein the adjustable beam separator comprises an optical input and is configured to couple the optical input to a first output path and to a second output path according to the beam separation ratio;

receiving a first optical signal at the optical input of the adjustable beam separator;

receiving a first signal from the first output path at a first detector and measuring the received first signal by the first detector in the first basis, and receiving a second signal from the second output path at a second detector and measuring the received second signal by the second detector in the second basis.

15.  The method of claim 14, further comprising:

adjusting the beam separation ratio of an adjustable beam separator according to a second value for the first ratio;

receiving a second optical signal at the optical input of the adjustable beam separator;

receiving a third signal from the first output path at the first detector and measuring the received third signal by the first detector in the first basis, and

receiving a fourth signal from the second output path at the second detector and measuring the received fourth signal by the second detector in the second basis,

wherein, optionally, the quantum communication device is located on the surface of the Earth, the method further comprising receiving the first value from a first satellite, and receiving the second value from a second satellite.

100

104

102

110

112

114

106B

106A

108B

108A

108

FIG. 1

FIG. 2

EP 4 730 673 A2

FIG. 3A

FIG. 3B

FIG. 3C

FIG. 3D

FIG. 3E

EP 4 730 673 A2

EP 4 730 673 A2

FIG. 4A

404

404B

404A

106A

FIG. 4B

λ

470

FIG.4C

λ

480

485

490

FIG. 4D

EP 4 730 673 A2

FIG. 5

FIG. 6B

FIG. 6A